# EUROPÄISCHE PATENTANMELDUNG

(11) **EP 2 439 242 A1**
(43) Veröffentlichungstag der Anmeldung: **11.04.2012**
(21) Anmeldenummer: 11183026.1
(22) Anmeldetag: 28.09.2011
(51) Int. Cl.: C09C 1/28, B01J 2/16, C04B 20/10, C04B 20/12

(54) **Granulatzusammensetzung auf Basis pigmentbeschichteter Trägermedien, Verfahren zu deren Herstellung und Anwendungsmöglichkeiten**

(30) Priorität: 08.10.2010 DE 102010047741
(71) Anmelder: Gebrüder Dorfner GmbH & Co. Kaolin- und Kristallquarzsand-Werke KG, 92242 Hirschau (DE)
(72) Erfinder: Holtmann, Klaus, 92226 Amberg (DE); Krüger, Mirko, 36100 Petersberg (DE)
(74) Vertreter: Hannke, Christian

(57) **Zusammenfassung**

Die vorliegende Erfindung betrifft ein Verfahren zur Herstellung von farbigen oder weißen Granulaten auf Basis von Trägerpartikeln, welche mittels Farb- oder Weißpigmenten beschichtet werden, wobei eine Oberfläche der Trägerpartikel im Wirbelschichtverfahren gleichmäßig mit mindestens einem Bindemittel mit einem Anteil von 2 - 40 Ma-% und mindestens einem farbigen oder weißen Pigment mit einem Anteil von 2 - 20 Ma-% beschichtet wird. Weiterhin betrifft die Erfindung ein Granulat auf Basis von mittels Weißpigmenten in Anwesenheit mindestens eines Bindemittels beschichteten Trägerpartikeln, wobei das Granulat ein mittels eines Wirbelschichtverfahrens aufgetragenes weißes Pigment mit einem Anteil von 2 - 20 Ma-% und ein Bindemittel mit einem Anteil von 2 - 40 Ma-% umfasst und das Granulat eine raue Oberfläche mit besonders starken Lichtstreuungs- und Reflexionseigenschaften und dadurch einen L*-Wert von über 86, bevorzugt von über 89, besonders bevorzugt von über 90 aufweist.

## Beschreibung

Die vorliegende Erfindung betrifft ein Verfahren zur Herstellung von farbigen oder weißen Granulaten auf Basis von Trägerpartikeln, welche mittels Farb- oder Weißpigmenten beschichtet werden, wobei eine Oberfläche der Trägerpartikel im Wirbelschichtverfahren gleichmäßig mit mindestens einem Bindemittel mit einem Anteil von 2-40 Ma-% und mindestens einem farbigen oder weißen Pigment mit einem Anteil von 2-20 Ma-% beschichtet wird. Weiterhin betrifft die Erfindung ein Granulat auf Basis von mittels Weißpigmenten in Anwesenheit mindestens eines Bindemittels beschichteten Trägerpartikeln, wobei das Granulat ein mittels eines Wirbelschichtverfahrens aufgetragenes weißes Pigment mit einem Anteil von 2-20 Ma-% und ein Bindemittel mit einem Anteil von 2 - 40 Ma-% umfasst und das Granulat eine raue Oberfläche mit besonders starken Lichtstreuungs- und Reflexionseigenschaften und dadurch einen L*-Wert (L* im L*a*b*-Farbraum) von über 86, bevorzugt von über 89, besonders bevorzugt von über 90 aufweist, sowie in der Endanwendung erzielt werden können.

Es besteht weltweit ein großer industrieller Bedarf an hochweißen Granulaten. Diese werden beispielsweise in der Bau- und Verbundwerkstoffindustrie in großen Mengen benötigt. Eine besonders wichtige Anwendung ist der Einsatz als Füllmaterial. Ein Beispiel für diese Verwendung sind Verbundmaterialien, bei denen derartige weiße oder farbige Granulate in Matrices (z.B. anorganische, wie z.B. Zement, oder organische, wie z.B. Kunstharz) eingegossen werden. Diese kommen dann als Dachziegel, Mauersteine, Kunststeine, Fliesen, Kacheln, Küchenarbeitsplatten, Sanitäreinrichtungen wie Waschbecken, Spülen, Wannen usw., Boden- oder Tischplatten, Natursteinimitate, Fensterbänke, Pflanztöpfe und in vielen anderen Formen in den Handel. Ein wichtiges Kriterium für die Verwendbarkeit eines derartigen Verbundmaterials ist der Füllgrad, also der Massenanteil in dem Verbundmaterial das farbige oder weiße Granulat zugesetzt werden kann. Andererseits verbessern sich mit steigendem Anteil an Füllstoff in der Polymermatrix viele Materialeigenschaften wie beispielsweise der E-Modul, die Kratzbeständigkeit und andere.

Während in vielen dieser Anwendungen gezielt die unterschiedliche Färbung einzelner Füllstoffpartikel ausgenutzt wird, um Marmorierungen, Farbverläufe, Sprenkelungen oder sonstige Farbeffekte in dem entsprechenden Objekt zu generieren, sind insbesondere im Sanitärbereich reinweiße Produkte gefordert. Ebenso sind homogen einfarbige Verbundstoffe auch in anderen Bereichen wünschenswert. Dies stellt besonders hohe Anforderungen an die eingesetzten Füllstoffe, die jeweils - und insbesondere bei weißen Produkten - den gewünschten Farb- oder Weißton in großer Reinheit aufweisen sollten. Nach dem Stand der Technik werden Partikel, Bindemittel und Pigmente über klassische Mischtechnologien zusammengebracht. Die erzielbaren Weißgrade oder Farbintensitäten werden hierbei vom gewählten Substrat stark beeinflußt.

Die Aufgabe der vorliegenden Erfindung ist die Bereitstellung eines Verfahrens zur Herstellung von hochweißen oder intensiv gefärbten Granulaten auf Basis von Trägerpartikeln, welche mittels Farb- oder Weißpigmenten beschichtet werden, wobei eine Oberfläche der Trägerpartikel gleichmäßig mit mindestens einem Bindemittel und mindestens einem farbigen oder weißen Pigment beschichtet wird.

Weiterhin ist es Aufgabe der Erfindung ein Farbiges oder weißes Granulat bereitzustellen, wobei die Oberfläche der Trägerpartikel eine homogene Beschichtung aufweist, welche mindestens ein Bindemittel und mindestens ein farbiges oder weißes Pigment umfasst.

Insbesondere zur Herstellung von weißen Füllstoffen ist es Aufgabe der Erfindung, ein Granulat auf Basis von mittels Weißpigmenten in Anwesenheit mindestens eines Bindemittels beschichteten Trägerpartikeln bereitzustellen, wobei das Granulat ein aufgetragenes weißes Pigment und ein Bindemittel umfasst und das Granulat eine raue Oberfläche mit besonders starken Lichtstreuungs- und Reflexionseigenschaften und dadurch einen besonders hohen Weißgrad bzw. L*-Wert aufweist.

Gelöst wird diese Aufgabe durch ein Verfahren zur Herstellung von farbigen oder weißen Granulaten auf Basis von Trägerpartikeln, welche mittels Farb- oder Weißpigmenten beschichtet werden, wobei eine Oberfläche der Trägerpartikel im Wirbelschichtverfahren gleichmäßig mit mindestens einem Bindemittel mit einem Anteil von 2-40 Ma-% und mindestens einem farbigen oder weißen Pigment mit einem Anteil von 2-20 Ma-% beschichtet wird.

Durch dieses Verfahren ist es möglich, eine feinverteilte, dünne und homogene Beschichtung der Trägerpartikel mit dem Bindemittel und dem Pigment zu erreichen. Durch das Wirbelschichtverfahren wird erreicht, dass das auf den erwärmten Trägerpartikel auftreffende Bindemittel oder Bindemittel/Pigment-Gemisch schnell trocknet und die Pigmentpartikel schnell auf der Trägerpartikeloberfläche sedimentieren. Dabei entstehen dünne und homogene Farbschichten.

Für die Beschichtung im Wirbelschichtverfahren wird eine Suspension aus Bindemittel und Pigment und unter Umständen Wasser als Verdünner in den gewünschten Anteilen hergestellt.

Mittels einer Dosierpumpe kann die Suspension in der benötigten Menge dem Wirbelschichtreaktor zugeführt und in diesen eingesprüht werden. Bevorzugt werden Zweistoffdüsen verwendet, wodurch besonders einfach über das Verhältnis zwischen eingesprühter Suspension und eingeblasener Luft die Tröpfchengröße entsprechend der Anforderungen reguliert werden kann. Prinzipiell sind sowohl Topspray als auch Bottomspray oder eine tangentiale Einsprühung möglich. Bevorzugt wird jedoch ein Eindüsen der Suspension von oben (Topspray). Ebenfalls ist es möglich, die einzelnen Komponenten gleichzeitig, gepulst oder zeitlich getrennt in flüssigem oder festem Zustand an einer oder mehreren Stellen der Sprühkammer einzusprühen.

Als besonders geeigneter Reaktoraufbau hat sich der Wursteraufbau erwiesen, wobei auch andere möglich sind. Das Trägermaterial wird von unten durch das Einblasen von Heißluft in der Schwebe gehalten.
Der Beschichtungsprozess wird beendet, wenn die zur Erreichung der Schichtdicke erforderliche Suspensionsmenge eingetragen ist. Danach erfolgt eine Fixierung der Beschichtung. Mit TiO₂ einer Korngröße (d₅₀ (bez. auf Volumen)) von ca. 200 µm als Weißpigment können nach dem beschriebenen Verfahren bereits im nicht nachbehandelten Granulat bei verschiedenen Masseanteilen von Bindemittel und Pigment bereits L*-Werte von zum Teil deutlich über 80 erreicht werden. Die L*-Werte bei der Verwendung unterschiedlicher Masseanteile von Bindemittel und TiO₂ als Weißpigment sind in Tabelle 1 dargestellt.

**Tabelle 1**

| | Weißpigmentmenge (TiO₂) / Ma-% | | | |
|---|---|---|---|---|
| Bindemittel / Ma-% | 5 | 10 | 12,5 | 15 |
| 5 | 82,0 | 85,5 | 87,3 | 86,7 |
| 10 | 81,2 | 85,5 | 86,2 | 87,3 |
| 15 | 81,2 | 85,5 | 86,2 | 87,3 |

Durch Fixieren der Granulate wird der Weißgrad bzw. L*-Wert nochmals deutlich gesteigert. Das Fixieren erfolgt beispielsweise über einen Zeitraum von 10 - 120 Minuten, bevorzugt 20 - 60 Minuten bei Temperaturen von 200- 900°C, bevorzugt 300 - 600°C. Die Weißgrade bzw. L*-Werte von derart behandelten Granulaten sind in Tabelle 2 angegebenen.

**Tabelle 2**

| | Weißpigmentmenge (TiO₂) / Ma-% | | | |
|---|---|---|---|---|
| Bindemittel / Ma-% | 5 | 10 | 12,5 | 15 |
| 5 | 86,45 | 90,06 | 90,55 | 91,32 |
| 10 | 88,38 | 88,30 | 89,97 | 90,91 |
| 15 | 83,16 | 84,36 | 86,83 | 86,76 |

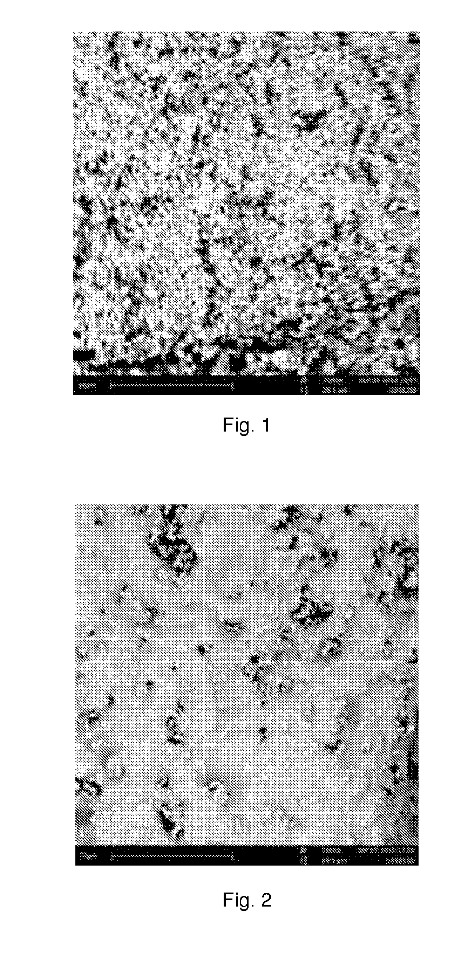

Demnach sind bereits mit 10 % TiO₂ als Weißpigment L*-Werte von über 90 möglich. Aus den Tabellen 1 und 2 ist auch ersichtlich, dass die Überdeckung des Trägerpartikels mit zunehmendem Anteil des Bindemittels steigt. Die im Anhang befindlichen Figuren 1 und 2 zeigen jeweils Ausschnitte aus den Oberflächen von mit 15 Ma-% TiO₂ beschichteten Trägerpartikeln. Dabei sind die Pigmentpartikel in Fig. 1 lediglich durch 5 Ma-% Bindemittel auf der Trägerpartikeloberfläche fixiert, wohingegen bei der in Fig. 2 gezeigten Probe 15 Ma-% Bindemittel zugesetzt wurden.

In einer bevorzugten Variante des Verfahrens erfolgt die Beschichtung der Trägerpartikel einstufig, indem in einem Prozessschritt eine mindestens ein farbiges oder weißes Pigment umfassende Bindemittelschicht, als Suspension, welche mindestens ein Bindemittel und ein Pigment, bevorzugt eine Pigmentpaste, umfasst, auf die Trägerpartikel aufgebracht wird..

In einer weiteren bevorzugten Variante des Verfahrens erfolgt die Beschichtung der Trägerpartikel zweistufig, indem in einem ersten Prozessschritt zunächst eine Bindemittelschicht auf die Trägerpartikel aufgebracht wird und in einem zweiten Prozessschritt das farbige oder weiße Pigment auf die Trägerpartikel optional in Verbindung mit dem und/oder einem weiterem Bindemittel aufgebracht wird.

Dabei kann jeder der Prozessschritte wiederum mehrstufig ablaufen. Bei den dabei verwendeten Bindemitteln kann es sich auch um verschiedene Bindemittel handeln. Auf die oberste dieser Bindemittelschichten wird dann im zweiten Prozessschritt das Pigment aufgebracht, wobei dieses wiederum mit Bindemittel fixiert wird. Es kann dabei ein zuvor bereits aufgebrachtes Bindemittel verwendet werden oder ein geeignetes anderes Bindemittel. Bei der Auswahl geeigneter Bindemittel kann eine Vielzahl von Parametern zur Bewertung herangezogen werden. Beispielsweise der Brechungsindex, die Benetzbarkeit, die rheologischen Eigenschaften, die Aushärtetemperatur, die Aushärtezeit, die Fähigkeit das Pigment zu binden und diverse andere.

Das Wirbelschichtverfahren ermöglicht auf besonders einfache Weise, verschiedene Oberflächenbeschichtungen nacheinander aufzubringen. Ebenso ist es durch das Wirbelschichtverfahren leicht möglich, verschiedene Beschichtungen nacheinander aufzutragen. So können beispielsweise nacheinander verschiedene Bindemittel eingedüst werden, um eine verschiedenlagige Bindemittelschicht aufzutragen. Ebenso ist es möglich, nach dem Auftragen der Bindemittel oder des Bindemittels durch Eindüsen einer oder mehrerer Pigment- oder Pigment-/Bindemittelsuspension/en auf das zuvor aufgetragene Bindemittel das Pigment bzw. die Pigmente abzuscheiden.

Als Pigment können Pigmente jeder beliebigen Farbe verwendet werden. Da jedoch insbesondere bei weißen Beschichtungen ein enormer Bedarf an homogen beschichteten Granulaten besteht, wird in einer bevorzugten Variante des Verfahrens als Pigment ein Weißpigment verwendet und die unter dessen Verwendung hergestellten Granulate weisen einen L*-Wert von über 86, bevorzugt von über 89, besonders bevorzugt von über 90 auf. Erreicht werden sie durch die homogene Beschichtung von Trägermaterial mit TiO₂ in einem Massenanteil von 10 % oder mehr. Als Weißpigment sind jedoch auch andere Pigmente wie BaSO₄, Christobalit, PbCO₃, ZnO, ZnS, ein Erdalkalicarbonat oder andere Weißpigmente möglich. In einer bevorzugten Variante des Verfahrens wird daher als Weißpigment BaSO₄, Christobalit, PbCO₃, ZnO, ZnS, Kaolin, kalziniertes Kaolin, ein Erdalkalicarbonat, TiO₂ oder Mischungen daraus verwendet, wobei TiO₂ oder TiO₂-enthaltende Mischungen besonders bevorzugt sind.

Als besonders günstig haben sich breite Pigmentpartikelgrößenverteilungen herausgestellt. Um diese breite Pigmentpartikelgrößenverteilung zu gewährleisten können Mischungen aus Pigmentpartikeln verschiedener Körnungen gemischt werden. In einer bevorzugten Variante des Verfahrens werden als Weißpigment daher Mischungen aus feinkörnigen und grobkörnigen Weißpigmenten verwendet. Besonders bevorzugt werden als feinere Pigmentpartikel Partikel verwendet, welche Korngrößten mit d₅₀ (Volumen) zwischen 35 nm und 750 nm aufweisen. Als gröbere Pigmentpartikel werden bevorzugt Partikel mit d₅₀-Werten zwischen 0,5 µm und 100 µm, bevorzugt zwischen 1 µm und 20 µm verwendet.

Als besonders geeignetes Substrat haben sich Bauschutt, Glas, Altglas, Kies, Kunststoffe, Verbundmaterialien, Mineralien auf Carbonatbasis, Mineralien auf Silikatbasis und insbesondere Kristallquarz erwiesen. In einer bevorzugten Variante des Verfahrens werden daher als Trägerpartikel Materialien einer definierten Korngrößenverteilung verwendet, wobei diese Materialien ausgewählt sind aus einer Gruppe, welche Bauschutt, Glas, Altglas, Kies, Kunststoffe, Verbundmaterialien, Mineralien auf Carbonatbasis, Mineralien auf Silikatbasis und besonders bevorzugt Kristallquarz umfasst. Kristallquarz bietet sich aufgrund seiner hellen Eigenfarbe, der einheitlichen Materialbeschaffenheit, dem günstigen Preis und der weltweiten Verfügbarkeit besonders an.

Im Gegensatz zu den mit splittrigen oder kantigen Füllstoffen üblicherweise erreichbaren Füllgraden von ca. 60 - 70 % des Verbundmaterials, lassen sich mit kantengerundeten Trägerpartikeln Füllgrade von ca. 70 bis sogar über 80 % bezogen auf das Verbundmaterial erreichen.

Durch das erfindungsgemäße Verfahren lassen sich die Kristallquarze deckend homogen und opak mit weißen Pigmenten beschichten und weisen gegenüber anderen weißen Füllstoffen wie z.B. Cristobalit eine wesentlich verbesserte Rheologie und deutlich höhere erreichbare Füllgrade auf. Mit diesen Farbsanden ist es möglich, auch unifarbene Oberflächen herzustellen.

Dennoch haben sich als Bindemittel Wasserglas, Polyurethane, Epoxide, Silikon, lösungsmittelfreie Lacksysteme, lösungsmittelhaltige Lacksysteme, Schmelzlacke oder Mischungen aus diesen als besonders geeignet herausgestellt. Wie der obigen Aufzählung zu entnehmen ist, können als Bindemittel sowohl organische als auch anorganische Substanzen verwendet werden. Daher werden in einer bevorzugten Variante des Verfahrens als Bindemittel anorganische oder organische Bindemittel verwendet, wobei diese Bindemittel bevorzugt ausgewählt sind aus einer Gruppe, welche Wasserglas, Polyurethane, Epoxide, Silikon, lösungsmittelfreie Lacksysteme, lösungsmittelhaltige Lacksysteme, Schmelzlacke oder Mischungen dieser umfasst. Besonders bevorzugt werden Bindemittelsysteme oder Mischungen aus wässrigen Bindemittelsystemen.

In einer bevorzugen Variante des Verfahrens werden als Bindemittel Materialien verwendet, welche einen optischen Brechungsindex n_{D} von > 1,3, bevorzugt > 1,4, besonders bevorzugt > 1,5 aufweisen.

Ein weiterer wesentlicher Aspekt der Erfindung ist ein farbiges oder weißes Granulat, welches nach einem der oben beschriebenen Verfahren hergestellt wurde, wobei eine Oberfläche der Trägerpartikel eine Beschichtung aufweist, welche mindestens ein Bindemittel mit einem Anteil von 2-40 Ma-% und mindestens ein farbiges oder weißes Pigment mit einem Anteil von 2-20 Ma-% umfasst. Diese Granulate weisen die bereits oben beschrieben Vorteile vor allem in Bezug auf die Homogenität der Oberflächenbeschichtung mit einem Pigment auf. Weiterhin sind sie günstig in den Materialkosten und leicht im Wirbelschichtverfahren herzustellen.

Da insbesondere weiße Granulate eine große Rolle in Bezug auf Sanitäranwendungen spielen, ist ein weiterer wesentlicher Aspekt der Erfindung ein Granulat auf Basis von mittels Weißpigmenten in Anwesenheit mindestens eines Bindemittels beschichteten Trägerpartikeln, wobei das Granulat ein mittels eines Wirbelschichtverfahrens aufgetragenes weißes Pigment mit einem Anteil von 2 - 20 Ma-% und ein Bindemittel mit einem Anteil von 2 - 40 Ma-% umfasst und das Granulat eine raue Oberfläche mit besonders starken Lichtstreuungs- und Reflexionseigenschaften und dadurch einen L*-Wert von über 88, bevorzugt von über 89, besonders bevorzugt von über 90 aufweist. Diese weißen Granulate eignen sich besonders zur Verwendung als Füllstoffe und Verbundmaterialien, welche im Sanitärbereich eingesetzt werden können. Jedoch sind selbstverständlich auch andere Anwendungen wie beispielsweise in der Bauindustrie denkbar.

Daher ist ein weiterer wesentlicher Aspekt der Erfindung die Verwendung eines der oben erwähnten Granulate als Füllstoff oder als Effektgranulat in einer Bindemittelmatrix.

Bei einem Füllgrad von 70 Ma-% eines TiO₂-beschichteten Kristallquarzes in Polyesterharz konnten die in Tabelle 3 gezeigten L*-Werte (im L*a*b*-Farbraum) gemessen werden. Die für die Beschichtung eines Kristallquarzes verwendete Bindermenge ist dabei durch die Buchstaben A, B und C angegeben, wobei A einer geringen Bindemittelmenge, B einer mittleren Bindemittelmenge und C einer großen Bindemittelmenge entspricht. Die Bindemittelmengen liegen zwischen 2 und 40 Ma-% bezogen auf die Masse des Kristallquarzes. Die Pigmentmenge ist durch die dem Buchstaben folgende Zahl codiert, wobei größere Zahlenwerte eine steigende Pigmentmenge darstellen. Die Pigmentmengen liegen zwischen 2 und 20 Ma-% bezogen auf die Masse des Kristallquarzes. Demzufolge ist beispielsweise der Kristallquarz A 3 unter Einsatz einer geringen Bindemittelmenge und einer mittleren Pigmentmenge im Wirbelschichtverfahren beschichtet worden.

**Tabelle 3**

| **Versuch** | **Zusammensetzung** | | | **L*** |
|---|---|---|---|---|
| | Kristallquarz | TiO₂ / Ma-% | Füllstoffe* / Ma-% | |
| Kristallquarz im Harz - | A 3 | | | 89,87 |
| Kristallquarz im Harz | A 4 | | | 91,79 |
| Kristallquarz im Harz | A 5 | | | 92,90 |
| Kristallquarz und Zuschlag im Harz | A 5 | < 10 | | 94,33 |
| Kristallquarz und Zuschlag im Harz | A 5 | < 20 | | 94,65 |
| Versuch 1 | A 3 | < 20 | | 93,50 |
| Versuch 2 | A 3 | <10 | <10 | 92,95 |
| Versuch 3 | A 3 | | < 20 | 88,10 |
| Versuch 4 | A 3 | <15 | <10 | 93,41 |
| Versuch 5 | A 3 | < 10 | < 15 | 92,62 |
| Versuch 6 | C 3 | < 20 | | 93,77 |
| Versuch 7 | C 3 | < 10 | < 10 | 92,76 |
| Versuch 8 | C 3 | | < 20 | 86,68 |
| Versuch 9 | C 3 | < 15 | < 10 | 93,43 |
| Versuch 10 | C 3 | < 10 | < 15 | 92,14 |

| | | | | |
|---|---|---|---|---|
| *: als Füllstoffe werden multifunktionelle silikatische Füllstoffe mit Weißgraden bzw. L*-Werten > 89 verstanden. | | | | |

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

## Patentansprüche

1. Verfahren zur Herstellung von farbigen oder weißen Granulaten auf Basis von Trägerpartikeln, welche mittels Farb- oder Weißpigmenten beschichtet werden,
**dadurch gekennzeichnet, dass**
eine Oberfläche der Trägerpartikel im Wirbelschichtverfahren gleichmäßig mit mindestens einem Bindemittel mit einem Anteil von 2-40 Ma-% und mindestens einem farbigen oder weißen Pigment mit einem Anteil von 2-20 Ma-% beschichtet wird.

2. Verfahren nach Anspruch 1,
**dadurch gekennzeichnet, dass**
die Beschichtung der Trägerpartikel einstufig erfolgt, indem in einem Prozessschritt eine mindestens ein farbiges oder weißes Pigment umfassende Bindemittelschicht, als Suspension, welche mindestens ein Bindemittel und ein Pigment, bevorzugt eine Pigmentpaste, umfasst, auf die Trägerpartikel aufgebracht wird.

3. Verfahren nach Anspruch 1,
**dadurch gekennzeichnet, dass**
die Beschichtung der Trägerpartikel zweistufig erfolgt, indem in einem ersten Prozessschritt zunächst eine Bindemittelschicht auf die Trägerpartikel aufgebracht wird und in einem zweiten Prozessschritt das farbige oder weiße Pigment auf die Trägerpartikel optional in Verbindung mit dem und/oder einem weiterem Bindemittel aufgebracht wird.

4. Verfahren nach einem der vorangegangenen Ansprüche,
**dadurch gekennzeichnet, dass**
als Pigment ein Weißpigment verwendet wird und die unter dessen Verwendung hergestellte Granulate einen L*-Wert von über 86, bevorzugt von über 89, besonders bevorzugt von über 90 aufweisen.

5. Verfahren nach Anspruch 4,
**dadurch gekennzeichnet, dass**
als Weißpigment BaSO₄, Christobalit, PbCO₃, ZnO, ZnS, Kaolin, kalziniertes Kaolin, ein Erdalkalicarbonat, TiO₂ oder Mischungen daraus verwendet werden, wobei TiO₂ oder TiO₂-enthaltende Mischungen besonders bevorzugt sind.

6. Verfahren nach einem der Ansprüche 4 oder 5,
**dadurch gekennzeichnet, dass**
als Weißpigment Mischungen aus feinkörnigem und grobkörnigem Weißpigment verwendet werden.

7. Verfahren nach einem der vorangegangenen Ansprüche,
**dadurch gekennzeichnet, dass**
als Trägerpartikel Materialien einer definierten Korngrößenverteilung verwendet werden, wobei diese Materialien ausgewählt sind aus einer Gruppe, welche Bauschutt, Glas, Altglas, Kies, Kunststoffe, Verbundmaterialien, Mineralien auf Carbonatbasis, Mineralien auf Silikatbasis und besonders bevorzugt Kristallquarz umfasst.

8. Verfahren nach einem der vorangegangenen Ansprüche,
**dadurch gekennzeichnet, dass**
als Bindemittel anorganische oder organische Bindemittel verwendet werden, wobei diese Bindemittel bevorzugt ausgewählt sind aus einer Gruppe, welche Wasserglas, Polyurethane, Epoxide, Silikon, lösungsmittelfreie Lacksysteme, lösungsmittelhaltige Lacksysteme, Schmelzlacke oder Mischungen dieser umfasst

9. Verfahren nach einem der vorangegangenen Ansprüche,
**dadurch gekennzeichnet, dass**
als Bindemittel Materialien verwendet werden, welche einen optischen Brechungsindex n_{D} von > 1,3, bevorzugt > 1,4, besonders bevorzugt > 1,5 aufweisen.

10. Farbiges oder weißes Granulat, welches nach einem Verfahren gemäß der vorangegangenen Ansprüche hergestellt wurde,
**dadurch gekennzeichnet, dass**
eine Oberfläche der Trägerpartikel eine Beschichtung aufweist, welche mindestens ein Bindemittel mit einem Anteil von 2-40 Ma-% und mindestens ein farbiges oder weißes Pigment mit einem Anteil von 2 - 20 Ma-% umfasst.

11. Granulat auf Basis von mittels Weißpigmenten in Anwesenheit mindestens eines Bindemittels beschichteten Trägerpartikeln,
**dadurch gekennzeichnet, dass**
das Granulat ein mittels eines Wirbelschichtverfahrens aufgetragenes weißes Pigment mit einem Anteil von 2 - 20 Ma-% und ein Bindemittel mit einem Anteil von 2 - 40 Ma-% umfasst und das Granulat eine raue Oberfläche mit besonders starken Lichtstreuungs- und Reflexionseigenschaften und dadurch einen L*-Wert von über 86, bevorzugt von über 89, besonders bevorzugt von über 90 aufweist.

12. Verwendung eines Granulats nach einem der Ansprüche 10 oder 11 als Füllstoff oder als Effektgranulat in einer Bindemittelmatrix.

13. Verwendung eines Granulats nach Anspruch 12,
**dadurch gekennzeichnet, dass**
der Bindemittelmatrix Pigmente und/oder funktionelle silikatische Füllstoffe mit einem Weißgrad > 85, bevorzugt >89 zugesetzt sind.
